# EUROPEAN PATENT SPECIFICATION

(11) **EP 3 357 453 B1**
(45) Date of publication and mention of the grant of the patent: **04.09.2019**
(21) Application number: 18154315.8
(22) Date of filing: 31.01.2018
(51) Int. Cl.: A61C 17/02

(54) **ORAL CAVITY WASHING DEVICE AND NOZZLE FOR THE SAME**
MUNDHÖHLENWASCHVORRICHTUNG UND DÜSE DAFÜR
DISPOSITIF DE LAVAGE DE CAVITÉ BUCCALE ET SA BUSE

(30) Priority: 07.02.2017 JP 2017020724
(43) Date of publication of application: 08.08.2018
(73) Proprietor: Panasonic Intellectual Property Management Co., Ltd., Osaka-shi, Osaka 540-6207 (JP)
(72) Inventor: NUNOMURA, Mahito, Osaka-shi, Osaka 540-6207 (JP); TANIGUCHI, Shinichi, Osaka-shi, Osaka 540-6207 (JP)
(74) Representative: Grünecker Patent- und Rechtsanwälte PartG mbB

(56) References cited:
- WO-A1-2013/098691
- US-A- 5 860 942

## Description

### BACKGROUND

### 1. Technical Field

The present disclosure relates to an oral cavity washing device configured to wash an oral cavity with washing liquid and to a nozzle for the oral cavity washing device.

### 2. Description of the Related Art

A conventionally known oral cavity washing device includes: a nozzle having a flow passage structure including a flow passage that includes an inlet port for receiving washing liquid and an outlet port for ejecting the washing liquid; and a pump to feed the washing liquid to the inlet port, for example. Unexamined Japanese Patent Publication No. H10-33571 discloses an exemplary conventional oral cavity washing device. Prior art document WO 2013 / 098691 A1 discloses an oral care appliance according to the preamble of claim 1 and a nozzle according to the preamble of claim 6.

### SUMMARY

The conventional oral cavity washing device has reached a certain standard in terms of stain removal inside the oral cavity. The conventional device, however, leaves room for further study for improvement of added value.

The invention is defined by an oral cavity washing device as defined in claim 1 and a nozzle as defined in claim 6. An oral cavity washing device according to the present invention as defined in claim 1 includes: a nozzle having a flow passage structure including a flow passage that includes an inlet port for receiving washing liquid and an outlet port for ejecting the washing liquid; and a pump to feed the washing liquid to the inlet port such that a flow rate of the washing liquid ejected from the outlet port falls within a range of 200 mL/min to 350 mL/min. The flow passage structure includes: a first component having a first flow passage; a reducer disposed downstream of the first component; and a second component disposed downstream of the reducer. The reducer is configured to reduce a width of the flow passage. The second component has a second flow passage that widens with an advancement in a path from the reducer to the outlet port. The flow passage structure has the first component, the reducer, and the second component so as to generate cavitation in the washing liquid flowing through the flow passage when the flow rate of the washing liquid ejected from the outlet port falls within the range of 200 mL/min to 350 mL/min.

An oral cavity washing device and a nozzle for the same according to the present disclosure provide high added value.

### BRIEF DESCRIPTION OF THE DRAWINGS

FIG. 1 is a schematic view of an oral cavity washing device according to an exemplary embodiment;
FIG. 2 is a cross-sectional view of a nozzle shown in FIG. 1;
FIG. 3 is an enlarged view of portion A indicated in FIG. 2;
FIG. 4 is an enlarged view illustrating a reducer and a neighborhood of the reducer in FIG. 3;
FIG. 5 is a cross-sectional view illustrating an example method of manufacturing the nozzle in FIG. 1;
FIG. 6 is a table showing results of a first test;
FIG. 7 is a table showing results of a second test;
FIG. 8 is a graph showing results of a third test;
FIG. 9 is a graph showing results of a fourth test;
FIG. 10 is a cross-sectional view illustrating a method of manufacturing a nozzle according to a first modification example; and
FIG. 11 is a cross-sectional view illustrating a method of manufacturing a nozzle according to a second modification example.

### DETAILED DESCRIPTION

### (One example of a mode which an oral cavity washing device and a nozzle for the same can adopt)

An oral cavity washing device according to an aspect of the present disclosure includes: a nozzle having a flow passage structure to incorporate a flow passage that includes an inlet port for receiving washing liquid and an outlet port for ejecting the washing liquid; and a pump to feed the washing liquid to the inlet port such that a flow rate of the washing liquid ejected from the outlet port falls within a range of 200 mL/min to 350 mL/min. The flow passage structure includes: a first component having a first flow passage; a reducer disposed downstream of the first component; and a second component disposed downstream of the reducer. The reducer is configured to reduce a width of the flow passage. The second component has a second flow passage that widens with an advancement in a path from the reducer to the outlet port. The first component, the reducer, and the second component are configured to generate cavitation in the washing liquid flowing through the flow passage when the flow rate of the washing liquid ejected from the outlet port falls within the range of 200 mL/min to 350 mL/min.

Oral cavity washing devices can remove hard-to-remove stains on teeth by ejecting washing liquid from their nozzle. The stains on teeth are primarily food residue. Conventional oral cavity washing devices can appropriately remove food residue. However, these devices are not effective in removing plaque or other stubborn stains stuck to teeth. To offset such a disadvantage, Unexamined Japanese Patent Publication No. SHO62-213752 (hereinafter referred to as "PTL 1") presents a technology for generating cavitation inside a nozzle and ejecting washing liquid containing bubbles generated by cavitation (hereinafter referred to as "cavitation bubbles") from the nozzle, for example. When the washing liquid containing cavitation bubbles is ejected into an oral cavity, impact resulting from a burst of the cavitation bubbles readily removes plaque or other stubborn stains. PCT Japanese Translation Patent Publication No. 2015-503382 (hereinafter referred to as "PTL 2") discloses dimensions of a nozzle including a structure for cavitation generation.

The known technologies can improve the washing capability of oral cavity washing devices in terms of removal of stubborn stains by the spraying of washing liquid containing cavitation bubbles from their nozzle. However, when the influence of an oral cavity washing device on the oral cavity of a user is viewed from a broader perspective, appropriate removal of food residue and giving comfort to the user receiving washing liquid ejected into the oral cavity are important elements for the oral cavity washing device. The flow rate of the washing liquid ejected from the nozzle has influence on the removal of food residue and a feeling the user gets. Thus, the implementation of an oral cavity washing device capable of appropriately removing food residue, giving comfort to a user, and removing stubborn stains requires study on not only dimensions of a nozzle including a structure for cavitation generation but also the flow rate of washing liquid ejected from the nozzle. Unfortunately, PTLs 1 and 2 each do not refer to the flow rate of washing liquid ejected from a nozzle. Some dimensions disclosed in PTL 2 appear to include numerical values at which no cavitation is generated. Hence, the scope of conventional oral cavity washing devices contains no concept of implementing an oral cavity washing device capable of appropriately removing food residue, giving comfort to a user, and removing stubborn stains.

The inventor of the present application, against such a backdrop of conventional oral cavity washing devices, has studied an oral cavity washing device having a more desirable capability and invented an oral cavity washing device according to the present disclosure. The oral cavity washing device according to the present disclosure includes a pump to feed washing liquid to an inlet port of a nozzle such that a flow rate of the washing liquid ejected from an outlet port of the nozzle falls within a range of 200 mL/min to 350 mL/min. Test results and data confirm that washing liquid ejected from a nozzle into an oral cavity of a user can appropriately remove food residue and make the user feel comfortable when the flow rate of the washing liquid ejected from the nozzle falls within the range of 200 mL/min to 350 mL/min. Thus, the oral cavity washing device according to the present disclosure has a capability of appropriately removing food residue and a capability of giving comfort to the user. The oral cavity washing device according to the present disclosure further includes a first component, a reducer, and a second component are configured to generate cavitation in the washing liquid when the flow rate of the washing liquid ejected from the outlet port of the nozzle falls within the range of 200 mL/min to 350 mL/min. This configuration provides washing liquid that can appropriate remove food residue, give comfort to a user and contain cavitation bubbles. Consequently, the oral cavity washing device according to the present disclosure has a capability of removing stubborn stains in addition to the capability of appropriately removing food residue and the capability of giving comfort to the user. This configuration allows the oral cavity washing device to provide enhanced added value.

An example of the oral cavity washing device is configured such that the reducer includes a first wall surface and a second wall surface that are on opposite sides of a center line of the flow passage in a cross section of the nozzle taken along the center line. An inclination of the first wall surface relative to the center line in the cross section of the nozzle is represented by a first tangent line that is a tangent line to the first wall surface, when an inclination of the second wall surface relative to the center line in the cross section of the nozzle is represented by a second tangent line that is a tangent line to the second wall surface. An angle formed by the first and second tangent lines falls within a range of 120° to 135° inclusive.

A test confirmed that the quantity of cavitation bubbles contained in the washing liquid is satisfactory for stain removal inside an oral cavity when the angle formed by the first and second tangent lines falls within the range of 120° to 135° inclusive.

An example of the oral cavity washing device is configured such that the second component includes a third wall surface and a fourth wall surface that are on the opposite sides of the center line of the flow passage in the cross section of the nozzle taken along the center line. An inclination of the third wall surface relative to the center line in the cross section of the nozzle is represented by a third tangent line that is a tangent line to the third wall surface, when an inclination of the fourth wall surface relative to the center line in the cross section of the nozzle is represented by a fourth tangent line that is a tangent line to the fourth wall surface. An angle formed by the third and fourth tangent lines falls within a range of 5.5° to 6.5° inclusive.

A test confirmed that the quantity of cavitation bubbles contained in the washing liquid is satisfactory for stain removal inside an oral cavity when the angle formed by the third and fourth tangent lines falls within the range of 5.5° to 6.5° inclusive.

An example of the oral cavity washing device is configured such that a flow passage part of the reducer is circular in cross section orthogonal to the center line of the flow passage. The reducer includes a small-diameter segment being closest to the outlet port and having a flow passage inner diameter that falls within a range of 0.80 mm to 0.85 mm inclusive.

A test confirmed that the oral cavity washing device produces a high washing effect when the small-diameter segment inner diameter falls within the range of 0.80 mm to 0.85 mm inclusive. This is presumably because of an increase in the quantity of cavitation bubbles contained in the washing liquid fed into an oral cavity.

An example of the oral cavity washing device is configured such that the second component extends over a distance from the reducer to the outlet port. A length of the second component along the center line of the flow passage falls within a range of 8.5 mm to 10.0 mm inclusive.

A test confirmed that the oral cavity washing device produces a high washing effect when the length of the second component falls within the range of 8.5 mm to 10.0 mm inclusive. This is presumably because of an increase in the quantity of cavitation bubbles contained in the washing liquid fed into an oral cavity.

A nozzle for an oral cavity washing device according to an exemplary embodiment of the present disclosure is equivalent to the nozzle of the oral cavity washing device described above.

The nozzle of the oral cavity washing device described above produces effects that are substantially identical to the effects produced by the oral cavity washing device described above.

### (Exemplary embodiment)

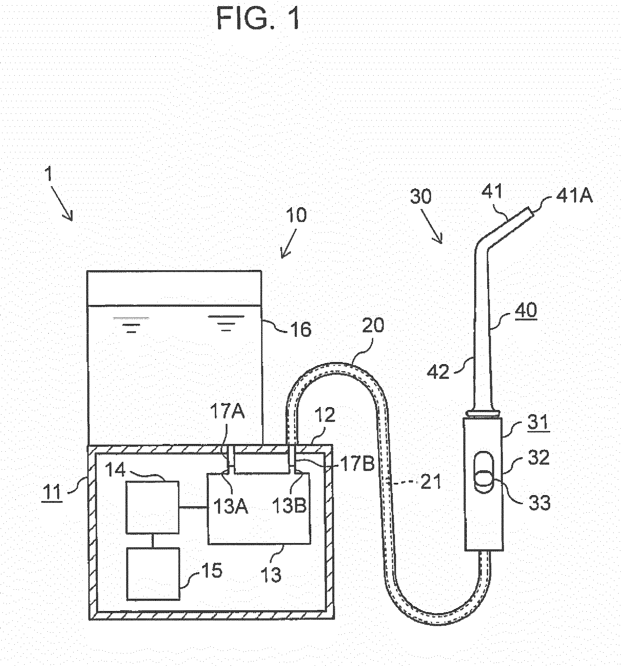

Oral cavity washing device 1 of FIG. 1 is used to wash an oral cavity, mainly to wash teeth and gums in an oral cavity. Oral cavity washing device 1 is placed on a flat installation surface such as a washstand (not shown). Oral cavity washing device 1 is driven by electric power supplied from an external power supply (not shown) such as a commercial power supply, and is configured to eject washing liquid into an oral cavity. Examples of the washing liquid include clean water mixed with detergent, and clean water.

Oral cavity washing device 1 includes body unit 10, tube 20, and washing unit 30. Body unit 10 includes device body 11 and tank 16. Tank 16 has a function of storing washing liquid. Tank 16 is detachably attached to device body 11, for example. Device body 11 accommodates various elements for driving oral cavity washing device 1. Device body 11 includes housing 12, pump 13, motor 14, power source part 15, and an operation part (not shown). Pump 13, motor 14, and power source part 15 are accommodated in housing 12. The operation part has a function of powering ON and powering OFF oral cavity washing device 1.
The operation part is disposed onto housing 12, for example.

Pump 13 has a function of discharging the washing liquid stored in tank 16. Pump 13 is a piston pump, for example. Device body 11 further includes upstream flow passage 17A and downstream flow passage 17B. Upstream flow passage 17A connects inlet 13A of pump 13 with tank 16 such that the washing liquid flows to pump 13. Downstream flow passage 17B connects outlet 13B of pump 13 with tube 20 such that the washing liquid flows to tube 20. In one example, pump 13 suctions washing liquid flowing through upstream flow passage 17A via inlet 13A and discharges the washing liquid from outlet 13B into downstream flow passage 17B. Downstream flow passage 17B may be provided with a check valve (not shown) so as to feed the washing liquid flowing through downstream flow passage 17B into tube 20. Motor 14 has a function of driving pump 13. Power source part 15 has a function of supplying motor 14 with electric power. In one example, a power cord (not shown) provided on device body 11 is connected to an external power supply that supplies electric power to power source part 15.

Tube 20 connects body unit 10 with washing unit 30 such that the washing liquid discharged from pump 13 is fed to washing unit 30 via flow passage 21. Flow passage 21 is disposed inside tube 20. Examples of the material for tube 20 include a highly flexible resin material. The resin material is exemplified by an ethylene vinyl acetate copolymer (EVA) resin.

Washing unit 30 is detachably attached to body unit 10, for example. Washing unit 30 includes case 31 and nozzle 40. Case 31 is made of a material such as an acrylonitrile butadiene styrene (ABS) resin. The washing liquid flowing through flow passage 21 of tube 20 passes a flow passage (not shown) inside case 31 and is fed to nozzle 40. Case 31 includes grip portion 32. Grip portion 32 is configured to be gripped by a single hand of a user. Nozzle 40 has a function of ejecting the washing liquid fed from pump 13. Nozzle 40 is detachably attached to case 31, for example.

Washing unit 30 further includes operation part 33. Operation part 33 is disposed on grip portion 32. Operation part 33 has a function of opening and closing a check valve (not shown) provided in the flow passage inside case 31. When operation part 33 is operated to open the check valve, the washing liquid flowing through tube 20 is ejected from outlet port 41A of nozzle 40. When operation part 33 is operated to close the check valve, the washing liquid is not ejected from outlet port 41A of nozzle 40.

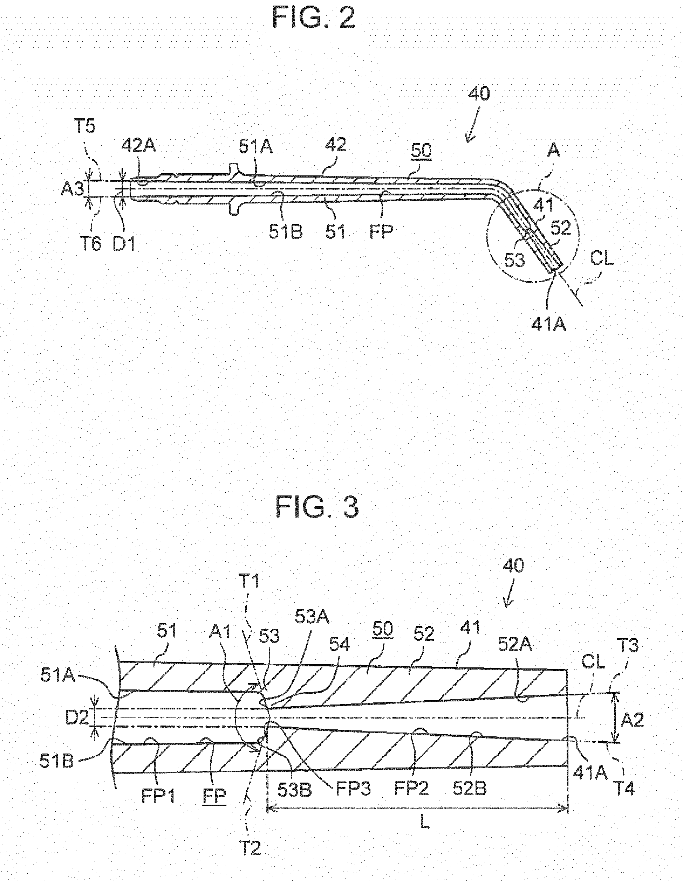

Nozzle 40 includes first section 41 and second section 42. First section 41 is situated nearer to outlet port 41A in comparison with second section 42. First section 41 is bent relative to second section 42, for example. In one example, center line CL (see FIG. 2) of nozzle 40 along first section 41 forms an angle of 55° with center line CL of nozzle 40 along second section 42. Examples of the material for nozzle 40 include resin materials. The resin materials are exemplified by an acrylonitrile styrene acrylate (ASA) resin, an ABS resin, and a polycarbonate (PC) resin.

FIG. 2 is a cross-sectional view of nozzle 40 taken along center line CL of flow passage FP. Nozzle 40 further includes flow passage structure 50. Flow passage FP is disposed in flow passage structure 50 of nozzle 40. Flow passage FP is, for example, circular in cross section orthogonal to center line CL of flow passage FP. The cross-sectional shape of flow passage FP is specified according to a criterion by which it is determined whether the shape facilitates the flow of washing liquid through flow passage FP, for example. Examples of the circular shape include substantially circular shapes that each produce an effect on a par with the circular shape in facilitation of the flow of washing liquid through flow passage FP. Examples of the substantially circular shapes include ellipses and round shapes that partly have microscopic projections or depressions.

Flow passage FP includes inlet port 42A and outlet port 41A. Inlet port 42A is disposed in second section 42, for example, and receives the washing liquid fed from pump 13 (see FIG. 1). Nozzle 40 is mounted on case 31 such that inlet port 42A is disposed inside case 31 and connected to the flow passage inside case 31. Inner diameter D1 of inlet port 42A is 3.4 mm, for example. Outlet port 41A is disposed in first section 41, for example, and is designed to eject the washing liquid flowing from inlet port 42A.

A length of nozzle 40 along flow passage FP of nozzle 40 is preferably within an exemplary range of 90 mm to 120 mm. The length of nozzle 40 is a length of flow passage FP across a range from inlet port 42A to outlet port 41A. In one example, the length of nozzle 40 is 105 mm. An example length of first section 41 along flow passage FP of nozzle 40 is 22 mm. An example tolerance for the length of first section 41 is ±1 mm. It is preferable that flow passage FP of nozzle 40 have an inner surface roughness of 0.2 µm or greater.

Pump 13 feeds the washing liquid to inlet port 42A such that a flow rate of the washing liquid ejected from outlet port 41A falls within a range of 200 mL/min to 350 mL/min. The range of a discharge pressure of pump 13 is preferably from 3.0 kgf/cm² to 8.0 kgf/cm² or the like. The washing liquid ejected from outlet port 41A of nozzle 40 has hydraulic pressure varied in accordance with the hydraulic pressure of the washing liquid discharged from pump 13.

Pump 13 has maximum discharge pressure preferably higher than predetermined maximum discharge pressure. The predetermined maximum discharge pressure is preferably determined in accordance with a relation with power of washing off plaque and the like in the oral cavity by the washing liquid ejected from outlet port 41A, for example. The predetermined maximum discharge pressure is preferred to be at least 4 kgf/cm² or the like. The predetermined maximum discharge pressure is more preferred to be at least 6 kgf/cm² or the like. In one example, the predetermined maximum discharge pressure is 8 kgf/cm².

With reference to FIG. 3, a configuration of flow passage structure 50 will be described.

Flow passage structure 50 includes first component 51, second component 52, and reducer 53. First component 51 includes first flow passage FP1. Reducer 53 is disposed downstream of first component 51. Reducer 53 is configured so as to reduce a width of flow passage FP. Second component 52 includes second flow passage FP2. Second flow passage FP2 is disposed downstream of reducer 53 and widens with an advancement in the path from reducer 53 to outlet port 41A. Reducer 53 includes third flow passage FP3. Third flow passage FP3 connects first flow passage FP1 with second flow passage FP2 and narrows with an advancement in the path from first flow passage FP1 to second flow passage FP2. First flow passage FP1, third flow passage FP3, and second flow passage FP2 constitute flow passage FP. Flow passage structure 50 has first component 51, reducer 53, and second component 52 so as to generate cavitation in the washing liquid flowing through flow passage FP when the flow rate of the washing liquid ejected from outlet port 41A of nozzle 40 falls within a range of 200 mL/min to 350 mL/min.

Reducer 53 includes first wall surface 53A and second wall surface 53B. First and second wall surfaces 53A and 53B are on opposite sides of center line CL of flow passage FP in a cross section of nozzle 40 taken along center line CL. An inclination of first wall surface 53A relative to center line CL in the cross section of nozzle 40 is represented by first tangent line T1 that is a tangent line to first wall surface 53A, whereas an inclination of second wall surface 53B relative to center line CL in the cross section of nozzle 40 is represented by second tangent line T2 that is a tangent line to second wall surface 53B. An angle formed by first and second tangent lines T1 and T2 (hereinafter referred to as "reducer angle A1") falls within a predetermined first angular range. The predetermined first angular range is specified such that the washing liquid ejected from outlet port 41A of nozzle 40 contains cavitation bubbles when the flow rate of the washing liquid falls within the range of 200 mL/min to 350 mL/min. The predetermined first angular range is preferably between an upper limit of 135° and a lower limit of 120° (inclusive), for example. When reducer angle A1 is 135° or less, the quantity of cavitation bubbles contained in the washing liquid is satisfactory for stain removal. A reducer angle A1 of 120° or greater contributes to an improvement in moldability of nozzle 40 formed using a mold. In one example, reducer angle A1 is 123°. An example tolerance for reducer angle A1 is ±2°.

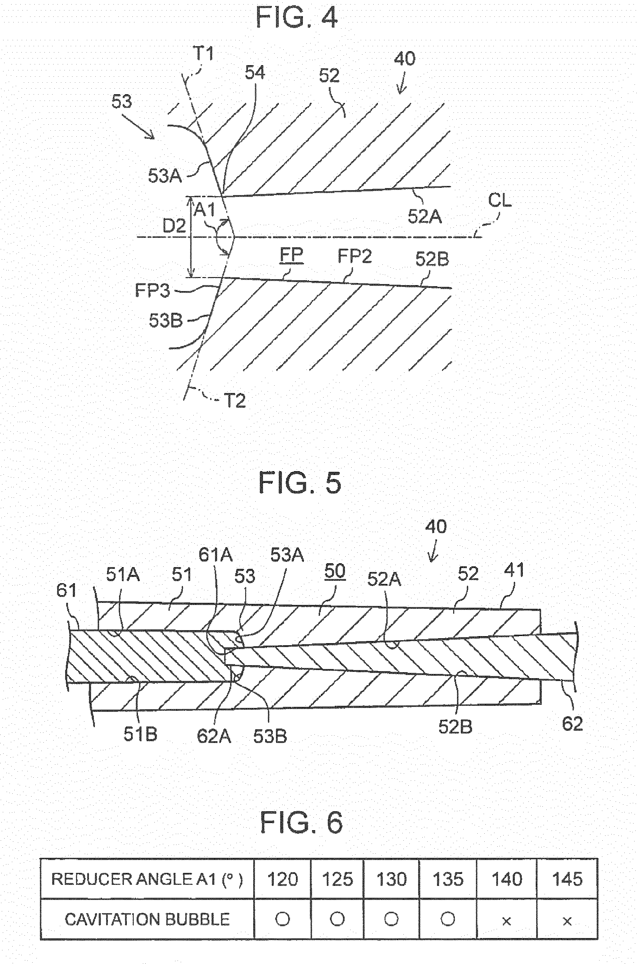

With reference to FIG. 4, first and second wall surfaces 53A and 53B have respective curves. First tangent line T1 is a straight line connecting a portion of reducer 53 closest to outlet port 41A (see FIG. 3) with a portion immediately in front of the curve of first wall surface 53A, for example. Second tangent line T2 is a straight line connecting the portion of reducer 53 closest to outlet port 41A with a portion immediately in front of the curve of second wall surface 53B, for example.

Third flow passage FP3 is circular in cross section orthogonal to center line CL of flow passage FP. Reducer 53 includes small-diameter segment 54. Small-diameter segment 54 is a segment of reducer 53 closest to outlet port 41A and has a smallest inner diameter among other segments of reducer 53. The inner diameter of small-diameter segment 54 (hereinafter referred to as "small-diameter segment inner diameter D2") for third flow passage FP3 falls within a predetermined inner diameter range. The predetermined inner diameter range is specified such that the washing liquid ejected from outlet port 41A of nozzle 40 contains cavitation bubbles when the flow rate of the washing liquid falls within the range of 200 mL/min to 350 mL/min. The predetermined inner diameter range is preferably between an upper limit of 0.85 mm and a lower limit of 0.80 mm (inclusive), for example. When small-diameter segment inner diameter D2 is 0.85 mm or smaller, the quantity of cavitation bubbles contained in the washing liquid is satisfactory for stain removal. When small-diameter segment inner diameter D2 is 0.80 mm or larger, the washing liquid is ejected from outlet port 41A of nozzle 40 at an appropriate flow rate. In one example, small-diameter segment inner diameter D2 is 0.82 mm. An example tolerance for small-diameter segment inner diameter D2 is ±0.02 mm.

With reference to FIG. 3, second component 52 includes third wall surface 52A and fourth wall surface 52B. Third and fourth wall surfaces 52A and 52B are on the opposite sides of center line CL of flow passage FP in the cross section of nozzle 40 taken along center line CL. An inclination of third wall surface 52A relative to center line CL in the cross section of nozzle 40 is represented by third tangent line T3 that is a tangent line to third wall surface 52A, whereas an inclination of fourth wall surface 52B relative to center line CL in the cross section of nozzle 40 is represented by fourth tangent line T4 that is a tangent line to fourth wall surface 52B. An angle formed by third and fourth tangent lines T3 and T4 (hereinafter referred to as "second component angle A2") falls within a predetermined second angular range. The predetermined second angular range is specified such that the washing liquid ejected from outlet port 41A of nozzle 40 contains cavitation bubbles when the flow rate of the washing liquid falls within the range of 200 mL/min to 350 mL/min. The predetermined second angular range is preferably between an upper limit of 6.5° and a lower limit of 5.5° (inclusive), for example. If second component angle A2 is 6.5° or less, the quantity of cavitation bubbles contained in the washing liquid is satisfactory for stain removal. A second component angle A2 of 5.5° or greater facilitates the application of pressure for cavitation generation to washing liquid flowing through second flow passage FP2. In one example, second component angle A2 is 6.0°. An example tolerance for second component angle A2 is ±0.5°.

Second component 52 extends over a distance from reducer 53 to outlet port 41A, for example. A length of second component 52 in a direction along center line CL of flow passage FP (hereinafter referred to as "second component length L") falls within a predetermined length range. The predetermined length range is specified such that the washing liquid ejected from outlet port 41A of nozzle 40 contains cavitation bubbles when the flow rate of the washing liquid falls within the range of 200 mL/min to 350 mL/min. The predetermined length range is preferably between an upper limit of 10.0 mm and a lower limit of 8.5 mm (inclusive), for example. A second component length L of 10.0 mm or shorter facilitates enhanced comfort given to the user. When second component length L is 8.5 mm or longer, the quantity of cavitation bubbles contained in the washing liquid is satisfactory for stain removal. In one example, second component length L is 9.0 mm. An example tolerance for second component length L is 0.1 mm.

With reference to FIG. 2, first component 51 includes fifth wall surface 51A and sixth wall surface 51B. Fifth and sixth wall surfaces 51A and 51B are on the opposite sides of center line CL of flow passage FP in the cross section of nozzle 40 taken along center line CL. An inclination of fifth wall surface 51A relative to center line CL in the cross section of nozzle 40 is represented by fifth tangent line T5 that is a tangent line to fifth wall surface 51A, whereas an inclination of sixth wall surface 51B relative to center line CL in the cross section of nozzle 40 is represented by sixth tangent line T6 that is a tangent line to sixth wall surface 51B. It is preferable that an angle formed by fifth and sixth tangent lines T5 and T6 (hereinafter referred to as "first component angle A3") fall within a range of 1.0° to 2.0°.

With reference to FIG. 5, an example method for producing nozzle 40 will now be described.

Nozzle 40 is produced by injection molding, for example. In one example, nozzle 40 is produced using first part 61 and second part 62. An outline of first part 61 runs along wall surfaces 51A, 51B of first component 51 and wall surfaces 53A, 53B of reducer 53, for example. First part 61 includes recess 61A. An outline of second part 62 runs along wall surfaces 52A, 52B of second component 52, for example. Second part 62 includes insertion 62A. Insertion 62A is designed to be put inside recess 61A.

First and second parts 61 and 62 are inserted into a mold (not shown) for forming a contour of nozzle 40 such that insertion 62A of second part 62 is put inside recess 61A of first part 61. Next, a heated resin is charged into the mold so that the charged resin is solidified. First and second parts 61 and 62 are pulled out of the mold, and produced nozzle 40 is taken out of the mold. Nozzle 40 is produced by following the steps above. Nozzle 40 provides improved moldability because reducer angle A1 falls within the predetermined first angular range. First part 61 can be readily pulled out of the mold because first component angle A3 falls within the range of 1.0° to 2.0°.

With reference to FIGS. 1 to 3, an example method for using oral cavity washing device 1 will be described.

Oral cavity washing device 1 is used by a user or the like in a following manner. In a first step, a predetermined amount of the washing liquid is poured into tank 16, and tank 16 is attached to device body 11. In a second step, the operation part of body unit 10 is operated to power on oral cavity washing device 1. When oral cavity washing device 1 is powered on, pump 13 starts being driven. In a third step, grip portion 32 of washing unit 30 is grasped, and outlet port 41A of nozzle 40 is directed into an oral cavity. In a fourth step, operation part 33 of washing unit 30 is operated to eject the washing liquid from outlet port 41A. The washing liquid ejected from outlet port 41A thus washes the oral cavity.

The washing liquid discharged from pump 13 passes through flow passage FP of nozzle 40 in a process for ejecting the washing liquid from outlet port 41A. Since pressure put on the washing liquid flowing through third flow passage FP3 of reducer 53 falls below a saturated vapor pressure and pressure put on the washing liquid flowing through second flow passage FP2 of second component 52 recovers to the saturated vapor pressure or higher, cavitation occurs in the washing liquid flowing through flow passage FP of nozzle 40. This configuration readily removes plaque or other stubborn stains by impact resulting from a burst of cavitation bubbles contained in the washing liquid ejected from outlet port 41A of nozzle 40 into the oral cavity.

It is proven that washing liquid ejected into the oral cavity of a user appropriately removes food residue and makes the user feel comfortable when the flow rate of the washing liquid ejected from outlet port 41A of nozzle 40 falls within the range of 200 mL/min to 350 mL/min. In this way, oral cavity washing device 1 has a capability of appropriately removing food residue, a capability of giving comfort to the user, and a capability of removing stubborn stains. As a result, oral cavity washing device 1 provides enhanced added value.

### (Example)

The inventor of the present application conducted first to fourth tests to assess effect produced by the configuration of flow passage structure 50 of oral cavity washing device 1. In the first and second tests, the inventor measured the extent of generation of cavitation bubbles using oral cavity washing device 1 according to the exemplary embodiment (hereinafter referred to as "oral cavity washing device 1 of the example") and an oral cavity washing device of a comparative example. In the third and fourth tests, the inventor measured washing capabilities exhibited by oral cavity washing device 1 of the example and the oral cavity washing device of the comparative example to wash samples that were used in addition to these oral cavity washing devices.

The first test will be described in detail. In the first test, oral cavity washing device 1 of the example had the following specifications. Tube 20 was made from an EVA resin. Tube 20 was 1 m long. The flow rate of the washing liquid ejected from outlet port 41A of nozzle 40 fell within the range of 200 mL/min to 350 mL/min. Nozzle 40 was made from an ASA resin. Reducer angle A1 differed from sample to sample within a range of 120° to 135° inclusive. First component angle A3 was 1.0°. Second component angle A2 was 6.0°. Small-diameter segment inner diameter D2 was 0.82 mm. Second component length L was 9.0 mm. Inner diameter D1 of inlet port 42A was 3.4 mm. The inner diameter of outlet port 41A was 1.76 mm. The washing liquid was clean water. Specifications of the oral cavity washing device of the comparative example were substantially the same as the specifications of oral cavity washing device 1 of the example with the exception of reducer angle A1. The oral cavity washing device of the comparative example had reducer angle A1 that differed from sample to sample within a range of 140° to 145° inclusive.

The first test measured whether or not the washing liquid ejected from nozzle 40 to each sample contained cavitation bubbles. The measurement method was a visual inspection through use of a high-speed video camera. FIG. 6 shows results of the first test. The test confirmed that the washing liquid ejected from nozzle 40 contained practically no cavitation bubbles when reducer angle A1 was 140° or greater. The results marked with the symbol "×" in FIG. 6 show that the state as described above was observed. States in which the washing liquid contains practically no cavitation bubbles include a state in which the washing liquid contains no cavitation bubble at all and a state in which the quantity of cavitation bubbles contained in the washing liquid is so minute that the cavitation bubbles make no contribution to stain removal. The test confirmed that the washing liquid ejected from nozzle 40 contained cavitation bubbles when reducer angle A1 was 135° or less. The test confirmed that the washing liquid ejected from nozzle 40 contained cavitation bubbles when reducer angle A1 was 120° or greater. The results marked with the symbol "○" in FIG. 6 show that the state as described above was observed. The first test confirmed that oral cavity washing device 1 displayed an improved washing capability when reducer angle A1 fell within the range of 120° to 135° inclusive.

The second test will be described in detail. In the second test, oral cavity washing device 1 of the example had the following specifications. Oral cavity washing devices 1 of the example in the first and second tests were similar to each other except for specifications in reducer angle A1 and second component angle A2. In the second test, reducer angle A1 was 123°. Second component angle A2 differed from sample to sample within a range of 5.5° to 6.5° inclusive. Specifications of the oral cavity washing device of the comparative example were substantially the same as the specifications of oral cavity washing device 1 of the example with the exception of second component angle A2. The oral cavity washing device of the comparative example had second component angle A2 that differed from sample to sample within a range of 7.0° to 7.5° inclusive.

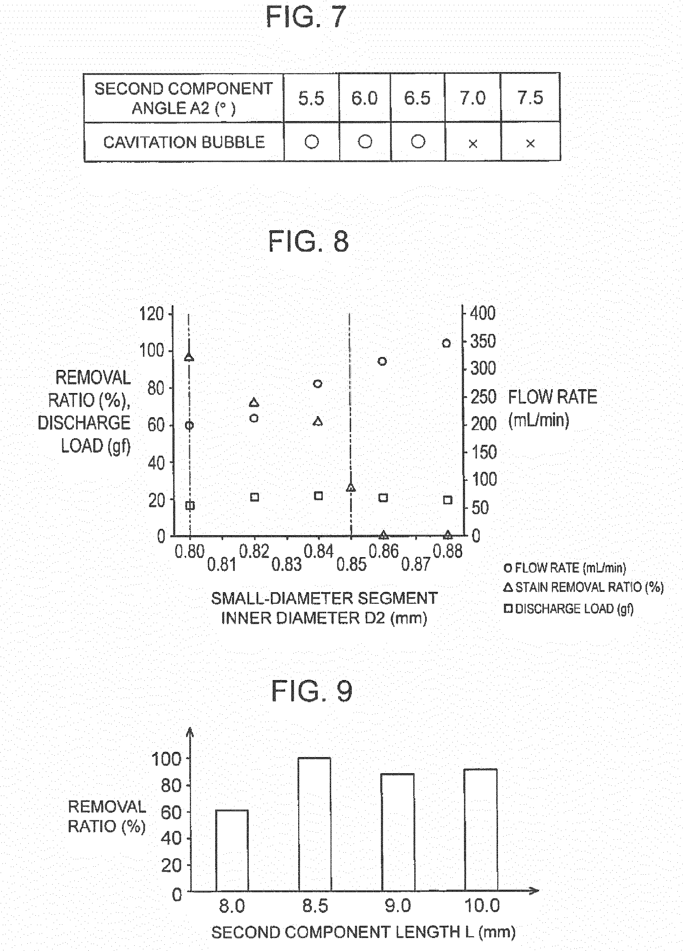

The second test measured whether or not the washing liquid ejected from nozzle 40 to each sample contained cavitation bubbles. The measurement method was a visual inspection through use of a high-speed video camera. FIG. 7 shows results of the second test. The test confirmed that the washing liquid ejected from nozzle 40 contained practically no cavitation bubbles when second component angle A2 was 7.0° or greater. The results marked with the symbol "×" in FIG. 7 show that the state as described above was observed. The test confirmed that the washing liquid ejected from nozzle 40 contained cavitation bubbles when second component angle A2 was 6.5° or less. The test confirmed that the washing liquid ejected from nozzle 40 contained cavitation bubbles when second component angle A2 was 5.5° or greater. The results marked with the symbol "○" in FIG. 7 show that the state as described above was observed. The second test confirmed that oral cavity washing device 1 displayed an improved washing capability if second component angle A2 fell within the range of 5.5° to 6.5° inclusive.

The third test will be described in detail. In the third test, oral cavity washing device 1 of the example had the following specifications. Oral cavity washing devices 1 of the example in the first and third tests were similar to each other except for specifications in reducer angle A1 and small-diameter segment inner diameter D2. In the third test, reducer angle A1 was 123°. Small-diameter segment inner diameter D2 differed from sample to sample within a range of 0.80 mm to 0.85 mm inclusive. Oral cavity washing device 1 ejected washing liquid from outlet port 41A of nozzle 40 such that a discharge load of the washing liquid fell within a range of 18 gf or greater. The discharge load is a hydraulic pressure of the washing liquid ejected from outlet port 41A. Specifications of the oral cavity washing device of the comparative example were substantially the same as the specifications of oral cavity washing device 1 of the example with the exception of small-diameter segment inner diameter D2. The oral cavity washing device of the comparative example had small-diameter segment inner diameter D2 that differed from sample to sample within a range of 0.86 mm to 0.88 mm inclusive.

Samples subject to washing in the third test were glass plates to which material X was applied. Material X was applied to each of the glass plates such that a layer of material X was formed throughout one surface of each glass plate. Material X has a quality similar to that of a stain or plaque attached to teeth. Material X is artificial plaque, for example. In the third test, washing liquid was ejected from nozzle 40 at a distance of 2.0 mm between outlet port 41A of nozzle 40 and the sample for a certain period of time. After completion of the spraying of the washing liquid, the quantity of material X left on the glass plate was measured. A washing capability of oral cavity washing device 1 was assessed by calculating a ratio of area S2 to area S1 (hereinafter referred to as a "removal ratio") based on measured results, where area S1 was an area covered by the ejected washing liquid on the glass plate and area S2 was an area covered by material X left in area S1 after spraying of the washing liquid. FIG. 8 shows results of the third test.

The test confirmed that the removal ratio was low when small-diameter segment inner diameter D2 was 0.86 mm or larger. This indicates that the quantity of cavitation bubbles contained in the washing liquid ejected from nozzle 40 was inadequate to remove stains. The test confirmed that the removal ratio was high when small-diameter segment inner diameter D2 was 0.85 mm or smaller. This indicates that the quantity of cavitation bubbles contained in the washing liquid ejected from nozzle 40 was adequate to remove stains. The test confirmed that the removal ratio was high when small-diameter segment inner diameter D2 was 0.80 mm or larger. The third test confirmed that oral cavity washing device 1 displayed an improved washing capability if small-diameter segment inner diameter D2 fell within the range of 0.80 mm to 0.85 mm inclusive.

The fourth test will be described in detail. In the fourth test, oral cavity washing device 1 of the example had the following specifications. Oral cavity washing devices 1 of the example in the first and fourth tests were similar to each other except for specifications in reducer angle A1 and second component length L. In the fourth test, reducer angle A1 was 123°. Second component length L differed from sample to sample within a range of 8.5 mm to 10.0 mm inclusive. Specifications of the oral cavity washing device of the comparative example were substantially the same as the specifications of oral cavity washing device 1 of the example with the exception of second component length L. The oral cavity washing device of the comparative example measured 8.0 mm in second component length L. The fourth test shared the assessment method with the third test. FIG. 9 shows results of the fourth test.

The test confirmed that the removal ratio was low when second component length L was 8.0 mm. This indicates that the quantity of cavitation bubbles contained in the washing liquid ejected from nozzle 40 was inadequate to remove stains. The test confirmed that the removal ratio was high when second component length L was 10.0 mm or shorter. This indicates that the quantity of cavitation bubbles contained in the washing liquid ejected from nozzle 40 was adequate to remove stains. The test confirmed that the removal ratio was high when second component length L was 8.5 mm or longer. The fourth test confirmed that oral cavity washing device 1 displayed an improved washing capability when second component length L fell within the range of 8.5 mm to 10.0 mm inclusive.

### (Modifications)

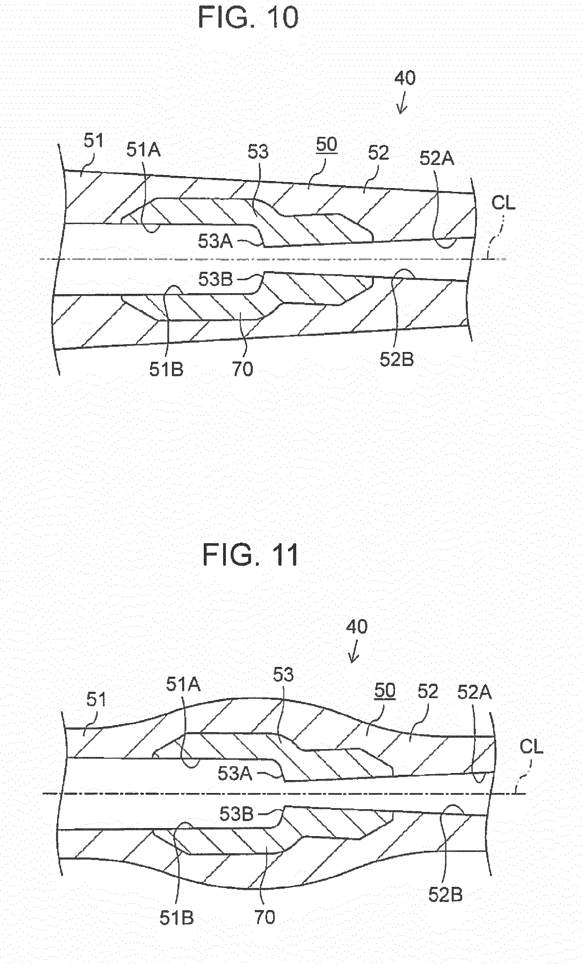

The exemplary embodiment exemplarily describes the oral cavity washing device and the nozzle for the same in a practicable mode of the present disclosure, and does not intend to limit the mode. The present disclosure can include, in addition to the exemplary embodiment, following modifications of the exemplary embodiment, and any configurations acquired by combining at least two modifications which do not contradict with each other.
- The method for producing nozzle 40 may be modified appropriately. In one example, nozzle 40 is produced by insert molding. In a first example shown in FIG. 10, prime constituent 70 is produced first to form wall surfaces 53A, 53B of reducer 53 and wall surfaces 51A, 51B, 52A, 52B of the surrounding components. In one example, prime constituent 70 is produced using first and second parts 61 and 62 (see FIG. 5), and a mold (not shown) for forming a contour of prime constituent 70. Next, first and second parts 61 and 62, and prime constituent 70 are inserted into a mold (not shown) for forming a contour of nozzle 40 such that first and second parts 61 and 62 support prime constituent 70. A heated resin is charged into the mold so that nozzle 40 containing prime constituent 70 is produced.

A second example shown in FIG. 11 differs from the first example in the mold for forming the contour of nozzle 40. Production of nozzle 40 by insert molding involves covering prime constituent 70 with a heated resin. Thus, the method in the first example uses a mold that allows nozzle 40 to have a large outside diameter on the whole. Meanwhile, in the second example, nozzle 40 is produced by using a mold that makes an outside diameter of nozzle 40 large only in a portion covering prime constituent 70. This allows nozzle 40 to come down in size.
- The size of reducer angle A1 may be modified appropriately. In the first example, reducer angle A1 is less than 120°. In the second example, reducer angle A1 is greater than 135°.
- The size of second component angle A2 may be modified appropriately. In the first example, second component angle A2 is less than 5.5°. In the second example, second component angle A2 is greater than 6.5°.
- The size of small-diameter segment inner diameter D2 may be modified appropriately. In one example, small-diameter segment inner diameter D2 is larger than 0.85 mm.
- The size of second component length L may be modified appropriately. In the first example, second component length L is shorter than 8.5 mm. In the second example, second component length L is longer than 10.0 mm.
- The shape of nozzle 40 may be modified appropriately. In an example of nozzle 40, first section 41 is not bent relative to second section 42.

The oral cavity washing device and the nozzle for the same according to the present disclosure can find application in oral cavity washing devices for households and businesses.

## Claims

1. An oral cavity washing device (1) comprising:
a nozzle (40) having a flow passage structure (50) including a flow passage (FP) that includes an inlet port (42A) for receiving washing liquid and an outlet port (41A) for ejecting the washing liquid; and
a pump (13) to feed the washing liquid to the inlet port (42A) such that a flow rate of the washing liquid ejected from the outlet port (41A) falls within a range of 200 mL/min to 350 mL/min,
wherein the flow passage structure (50) includes: a first component (51) having a first flow passage (FP1); a reducer (53) disposed downstream of the first component (51), the reducer (53) being configured to reduce a width of the flow passage (FP); and a second component (52) disposed downstream of the reducer (53), the second component (52) having a second flow passage (FP2) that widens with an advancement in a path from the reducer (53) to the outlet port (42A), and **characterized in that**
the first component (51), the reducer (53), and the second component (52) are configured to generate cavitation in the washing liquid flowing through the flow passage (FP) when the flow rate of the washing liquid ejected from the outlet port (41A) falls within the range of 200 mL/min to 350 mL/min.

2. The oral cavity washing device (1) according to claim 1,
wherein the reducer (53) includes a first wall surface (53A) and a second wall surface (53B) that are on opposite sides of a center line (CL) of the flow passage (FP) in a cross section of the nozzle (40) taken along the center line (CL), and
wherein when an inclination of the first wall surface (53A) relative to the center line (CL) in the cross section of the nozzle (40) is represented by a first tangent line (T1) that is a tangent line to the first wall surface (53A), and an inclination of the second wall surface (53B) relative to the center line (CL) in the cross section of the nozzle (40) is represented by a second tangent line (TL) that is a tangent line to the second wall surface (53B), an angle formed by the first and second tangent lines (T1, T2) falls within a range of 120° to 135° inclusive.

3. The oral cavity washing device (1) according to claim 1 or 2,
wherein the second component (52) includes a third wall surface (52A) and a fourth wall surface (52B) that are on the opposite sides of the center line (CL) of the flow passage (FP) in the cross section of the nozzle (40) taken along the center line (CL), and
wherein when an inclination of the third wall surface (52A) relative to the center line (CL) in the cross section of the nozzle (40) is represented by a third tangent line (T3) that is a tangent line to the third wall surface (52A), and an inclination of the fourth wall surface (52B) relative to the center line (CL) in the cross section of the nozzle (40) is represented by a fourth tangent line (T4) that is a tangent line to the fourth wall surface (52B), an angle formed by the third and fourth tangent lines (T3, T4) falls within a range of 5.5° to 6.5° inclusive.

4. The oral cavity washing device (1) according to any one of claims 1 to 3,
wherein a flow passage part of the reducer is circular in cross section orthogonal to the center line (CL) of the flow passage (FP), and
wherein the reducer (53) includes a small-diameter segment being closest to the outlet port and having a flow passage inner diameter that falls within a range of 0.80 mm to 0.85 mm inclusive.

5. The oral cavity washing device (1) according to any one of claims 1 to 4,
wherein the second component extends over a distance from the reducer (53) to the outlet port (41A), and
wherein a length of the second component (52) along the center line (CL) of the flow passage (FP) falls within a range of 8.5 mm to 10.0 mm inclusive.

6. A nozzle (40) provided for the oral cavity washing device (1) according to any one of claims 1 to 5, the nozzle having a flow passage structure (50) including a flow passage (FP) that includes an inlet port (42A) for receiving washing liquid and an outlet port (41A) for ejecting the washing liquid;
wherein the flow passage structure (50) includes: a first component (51) having a first flow passage (FP1); a reducer (53) disposed downstream of the first component (51), the reducer (53) being configured to reduce a width of the flow passage (FP); and a second component (52) disposed downstream of the reducer (53), the second component (52) having a second flow passage (FP2) that widens with an advancement in a path from the reducer (53) to the outlet port (42A),
and **characterized in that** the first component (51), the reducer (53), and the second component (52) are configured to generate cavitation in the washing liquid flowing through the flow passage (FP) when the flow rate of the washing liquid ejected from the outlet port (41A) falls within the range of 200 mL/min to 350 mL/min.

## Patentansprüche

1. Mundhöhlenwaschvorrichtung (1), umfassend:
eine Düse (40), die eine Durchgangstruktur (50) aufweist, die einen Durchgang (FP) umfasst, der eine Einlassöffnung (42A), um Waschflüssigkeit einzulassen, und eine Auslassöffnung (41A), um Waschflüssigkeit auszulassen, umfasst; und
eine Pumpe (13), die die Waschflüssigkeit der Einlassöffnung (42A) zuführt, damit der Volumenstrom der Waschflüssigkeit, die aus der Auslassöffnung (41A) ausgelassen wird, innerhalb eines Bereichs zwischen 200 mL/min bis 350 mL/min liegt,
wobei die Durchgangsstruktur (50) Folgendes umfasst: eine erste Komponente (51), die einen ersten Durchgang (FP1) aufweist, ein Reduzierstück (53), das stromabwärts der ersten Komponente (51) angeordnet ist, wobei das Reduzierstück (53) konfiguriert ist, eine Breite des Durchgangs (FP) zu reduzieren; und eine zweite Komponente (52), die stromabwärts des Reduzierstücks (53) angeordnet ist, wobei die zweite Komponente (52) einen zweiten Durchgang (FP2) aufweist, der sich mit einem Vorangehen entlang einem Weg von dem Reduzierstück (53) bis zu der Auslassöffnung (42A) erweitert, und **dadurch gekennzeichnet, dass**
die erste Komponente (51), das Reduzierstück (53) und die zweite Komponente (52) konfiguriert sind, Kavitation in der Waschflüssigkeit, die durch den Durchgang (FP) fließt, zu generieren, wenn der Volumenstrom der Waschflüssigkeit, die aus der Auslassöffnung (41A) ausgelassen wird, innerhalb eines Bereichs zwischen 200 mL/min bis 350 mL/min liegt.

2. Mundhöhlenwaschvorrichtung (1) nach Anspruch 1,
wobei das Reduzierstück (53) eine erste Wandfläche (53A) und eine zweite Wandfläche (53B) umfasst, die an gegenüberliegenden Seiten von einer Zentrallinie (CL) des Durchgangs (FP) in einem Querschnitt der Düse (40), der entlang der Zentrallinie (CL) genommen wird, angeordnet sind, und
wobei, wenn eine Neigung der ersten Wandfläche (53A) bezüglich der Zentrallinie (CL) auf dem Querschnitt der Düse (40) durch eine erste Tangentiallinie (T1), die eine Tangentiallinie zu der ersten Wandfläche (53A) ist, dargestellt wird, und eine Neigung der zweiten Wandfläche (53B) bezüglich der Zentrallinie (CL) in dem Querschnitt der Düse (40) durch eine zweite Tangentiallinie (T2), die eine Tangentiallinie zu der zweiten Wandfläche (53B) ist, dargestellt wird, ein Winkel, der von der ersten und der zweiten Tangentiallinie (T1, T2) geformt wird, innerhalb eines Bereichs zwischen jeweils einschließlich 120° bis 135° liegt.

3. Mundhöhlenwaschvorrichtung (1) nach Anspruch 1,
wobei die zweite Komponente (52) eine dritte Wandfläche (52A) und eine vierte Wandfläche (52B) umfasst, die an gegenüberliegenden Seiten von einer Zentrallinie (CL) des Durchgangs (FP) in einem Querschnitt der Düse (40), der entlang der Zentrallinie (CL) genommen wird, angeordnet sind, und
wobei, wenn eine Neigung der dritten Wandfläche (52A) bezüglich der Zentrallinie (CL) auf dem Querschnitt der Düse (40) durch eine dritte Tangentiallinie (T3), die eine Tangentiallinie zu der dritten Wandfläche (52A) ist, dargestellt wird, und eine Neigung der vierten Wandfläche (52B) bezüglich der Zentrallinie (CL) in dem Querschnitt der Düse (40) durch eine vierte Tangentiallinie (T4), die eine Tangentiallinie zu der vierten Wandfläche (52B) ist, dargestellt wird, ein Winkel, der von der dritten und der vierten Tangentiallinie (T3, T4) geformt wird, innerhalb eines Bereichs zwischen jeweils einschließlich 5.5° bis 6.5° liegt.

4. Mundhöhlenwaschvorrichtung (1) nach einem der Ansprüche 1 bis 3,
wobei der Durchgangsteil des Reduzierstücks in einem Querabschnitt, der orthogonal zu der Zentrallinie (CL) des Durchgangs (FP) ist, kreisförmig ist, und
wobei das Reduzierstück (53) ein Kleindurchmesser-Segment umfasst, das am nächsten zu der Auslassöffnung ist und einen Durchgang-Innendurchmesser, der innerhalb eines Bereichs zwischen jeweils einschließlich 0.80 mm bis 0.85 mm liegt, hat.

5. Mundhöhlenwaschvorrichtung (1) nach einem der Ansprüche 1 bis 4,
wobei die zweite Komponente sich über eine Distanz von dem Reduzierstück (53) bis zu der Auslassöffnung (41A) erstreckt, und
wobei eine Länge der zweiten Komponente (52) entlang der Zentrallinie (CL) des Durchgangs (FP) innerhalb eines Bereichs zwischen jeweils einschließlich 8.5 mm bis 10.0 mm liegt.

6. Düse (40), die für die Mundhöhlenwaschvorrichtung (1) nach einem der Ansprüche 1 bis 5 vorgesehen ist, wobei die Düse (40) eine Durchgangstruktur (50) aufweist, die einen Durchgang (FP) umfasst, der eine Einlassöffnung (42A), um Waschflüssigkeit einzulassen, und eine Auslassöffnung (41A), um Waschflüssigkeit auszulassen, umfasst; und
wobei die Durchgangsstruktur (50) Folgendes umfasst: eine erste Komponente (51), die einen ersten Durchgang (FP1) aufweist, ein Reduzierstück (53), das stromabwärts der ersten Komponente (51) angeordnet ist, wobei das Reduzierstück (53) konfiguriert ist, eine Breite des Durchgangs (FP) zu reduzieren; und eine zweite Komponente (52), die stromabwärts des Reduzierstücks (53) angeordnet ist, wobei die zweite Komponente (52) einen zweiten Durchgang (FP2) aufweist, der sich mit einem Vorangehen entlang einem Weg von dem Reduzierstück (53) bis zu der Auslassöffnung (42A) erweitert, und **dadurch gekennzeichnet, dass**
die erste Komponente (51), das Reduzierstück (53) und die zweite Komponente (52) konfiguriert sind, Kavitation in der Waschflüssigkeit, die durch den Durchgang (FP) fließt, zu generieren, wenn der Volumenstrom der Waschflüssigkeit, die aus der Auslassöffnung (41A) ausgelassen wird, innerhalb eines Bereichs zwischen 200 mL/min bis 350 mL/min liegt.

## Revendications

1. Dispositif de lavage de la cavité buccale (1) comprenant :
une buse (40) ayant une structure de passage d'écoulement (50) comprenant un passage d'écoulement (FP) qui comprend un orifice d'entrée (42A) pour recevoir le liquide de lavage et un orifice de sortie (41A) pour éjecter le liquide de lavage ; et
une pompe (13) pour alimenter le liquide de lavage à l'orifice d'entrée (42A) de sorte qu'une vitesse d'écoulement du liquide de lavage éjecté de l'orifice de sortie (41A) tombe à l'intérieur d'une plage de 200 ml/minute à 350 ml/minute,
la structure du passage d'écoulement (50) comprend : un premier composant (51) ayant un premier passage d'écoulement (FP1) ; un réducteur (53) disposé en aval du premier composant (51), le réducteur (53) étant configuré pour réduire une largeur du passage d'écoulement (FP) ; et un second composant (52) disposé en aval du réducteur (53), le second composant (52) ayant un second passage d'écoulement (FP2) qui s'élargit selon une progression dans un trajet depuis le réducteur (53) vers l'orifice de sortie (42A), et **caractérisé en ce que**
le premier composant (51), le réducteur (53), et le second composant (52) sont configurés pour générer une cavitation dans le liquide de lavage s'écoulant à travers le passage d'écoulement (FP) lorsque la vitesse d'écoulement du liquide de lavage éjecté depuis l'orifice de sortie (41A) tombe à l'intérieur de la plage de 200 ml/minute à 350 ml/minute.

2. Dispositif de lavage de la cavité buccale (1) selon la revendication 1,
le réducteur (53) comprenant une première surface de paroi (53A) et une seconde surface de paroi (53B) qui se trouvent sur des côtés opposés d'une ligne centrale (CL) du passage d'écoulement (FP) selon une coupe transversale de la buse (40) prise le long de la ligne centrale (CL), et
lorsqu'une inclinaison de la première surface de paroi (53A) par rapport à la ligne centrale (CL) dans la coupe transversale de la buse (40) est représentée par une première ligne tangente (T1) qui est une ligne tangente à la première surface de paroi (53A), et une inclinaison de la seconde surface de paroi (53B) par rapport à la ligne centrale (CL) dans la coupe transversale de la buse (40) est représentée par une seconde ligne tangente (TL) qui est une ligne tangente à la seconde surface de paroi (53B), un angle formé par la première et la seconde ligne tangente (T1, T2) tombe à l'intérieur d'une plage de 120° à 135° inclus.

3. Dispositif de lavage de la cavité buccale (1) selon la revendication 1 ou 2,
le second composant (52) comprenant une troisième surface de paroi (52A) et une quatrième surface de paroi (52B) qui se trouvent sur les côtés opposés de la ligne centrale (CL) du passage d'écoulement (FP) dans la coupe transversale de la buse (40) prise le long de la ligne centrale (CL), et
lorsqu'une inclinaison de la troisième surface de paroi (52A) par rapport à la ligne centrale (CL) dans la coupe transversale de la buse (40) est représentée par une troisième ligne tangente (T3) qui est une ligne tangente à la troisième surface de paroi (52A), et une inclinaison de la quatrième surface de paroi (52B) par rapport à la ligne centrale (CL) dans la coupe transversale de la buse (40) est représentée par une quatrième ligne tangente (T4) qui est une ligne tangente à la quatrième surface de paroi (52B), un angle formé par la troisième et la quatrième ligne tangente (T3, T4) tombe à l'intérieur d'une plage de 5,5° à 6,5° inclus.

4. Dispositif de lavage de la cavité buccale (1) selon l'une quelconque des revendications 1 à 3,
une partie du passage d'écoulement du réducteur étant circulaire en coupe transversale orthogonale à la ligne centrale (CL) du passage d'écoulement (FP), et
le réducteur (53) comprenant un segment de petit diamètre le plus proche de l'orifice de sortie et ayant un diamètre interne de passage d'écoulement qui tombe à l'intérieur d'une plage de 0,80 mm à 0,85 mm inclus.

5. Dispositif de lavage de la cavité buccale (1) selon l'une quelconque des revendications 1 à 4,
le second composant s'étendant sur une distance depuis le réducteur (53) jusqu'à l'orifice de sortie (41A), et
une longueur du second composant (52) le long de la ligne centrale (CL) du passage d'écoulement (FP) tombant à l'intérieur d'une plage de 8,5 mm à 10,0 mm inclus.

6. Buse (40) prévue pour le dispositif de lavage de la cavité buccale (1) selon l'une quelconque des revendications 1 à 5, la buse ayant une structure de passage d'écoulement (50) comprenant un passage d'écoulement (FP) qui comprend un orifice d'entrée (42A) pour recevoir le liquide de lavage et un orifice de sortie (41A) pour éjecter le liquide de lavage ;
la structure du passage d'écoulement (50) comprenant : un premier composant (51) ayant un premier passage d'écoulement (FP1) ; un réducteur (53) disposé en aval du premier composant (51), le réducteur (53) étant configuré pour réduire une largeur du passage d'écoulement (FP) ; et un second composant (52) disposé en aval du réducteur (53), le second composant (52) ayant un second passage d'écoulement (FP2) qui s'élargit selon une progression dans un trajet depuis le réducteur (53) vers l'orifice de sortie (42A),
et **caractérisée en ce que** le premier composant (51), le réducteur (53), et le second composant (52) sont configurés pour générer une cavitation dans le liquide de lavage s'écoulant à travers le passage d'écoulement (FP) lorsque la vitesse d'écoulement du liquide de lavage éjecté depuis l'orifice de sortie (41A) tombe à l'intérieur de la plage de 200 ml/minute à 350 ml/minute.
